Europäisches Patentamt

European Patent Office

Office européen des brevets

(11) Veröffentlichungsnummer: **0 231 877**
**A2**

# (12) EUROPÄISCHE PATENTANMELDUNG

(21) Anmeldenummer: 87101186.2

(22) Anmeldetag: 28.01.87

(51) Int. Cl.³: **B 01 D 33/04**
**B 30 B 9/24**

(30) Priorität: 06.02.86 DE 8603098 U

(43) Veröffentlichungstag der Anmeldung:
12.08.87 Patentblatt 87/33

(84) Benannte Vertragsstaaten:
AT BE CH DE ES FR GB GR IT LI LU NL SE

(71) Anmelder: Gebr. Bellmer GmbH & Co. KG,
Maschinenfabrik
Hauptstrasse 37
D-7532 Niefern 1(DE)

(72) Erfinder: Kollmar, Ulrich
Auf dem Berg-17
D-7530 Pforzheim(DE)

(74) Vertreter: Frank, Gerhard, Dipl.-Phys.
Patentanwälte Dr. F. Mayer & G. Frank Westliche 24
D-7530 Pforzheim(DE)

(54) **Reinigunsvorrichtung für ein Endlosband.**

(57) Die Erfindung schlägt verschiedene Anordnungen von Reinigungs- und Trocknungsvorrichtungen für Endlosbänder, insbesondere für Siebbänder in Bandfilterpressen vor, die je nach Einsatzzweck wahlweise miteinander zu kombinieren sind. Die Reinigungsvorrichtungen bestehen im wesentlichen aus Sprüharmen mit Sprühdüsen, die entweder stationär über der Bandoberfläche gehalten sind oder dort rotierende oder schwenkende Bewegungen ausführen.

Als Trocknungseinrichtungen sind ebenfalls verschiedene Varianten vorgeschlagen, vorzugsweise werden jedoch in den Umlauf des Endlosbandes mehrere Walzen eingeschaltet, von denen eine Walze als Saugwalze in dem Sinne ausgebildet ist, daß sie eine saugfähige Oberfläche, beispielsweise eine Filzbespannung, aufweist, mit deren Hilfe sie einen Großteil der auf dem Siebband noch befindlichen Restfeuchtigkeit entfernen kann.

Mit Hilfe einer geeigneten Kombination von Sprüh- und Trocknungseinrichtung lassen sich somit auch Bandfilterpressen in Gebieten, beispielsweise für Weinbauzwecke, einsetzen, bei denen die verwendeten Siebe oder Bänder einerseits gewaschen werden müssen, aber auf keinen Fall Waschwasser oder Waschflüssigkeit in das zu pressende und separierende Medium gelangen darf.

EP 0 231 877 A2

PATENTANWÄLTE
DR. FRIEDRICH E. MAYER
DIPL-PHYS. G. FRANK
WESTLICHE 24
7530 PFORZHEIM

0231877
7234

Gebr. Bellmer GmbH & Co. KG Maschinenfabrik, 7532 Niefern 1

Reinigungsvorrichtung für ein Endlosband.

Die Erfindung betrifft eine Reinigungsvorrichtung für ein Endlosband, insbesondere für Siebbänder in einer Bandfilterpresse, mit Spritzdüsen zur flächigen Verteilung der Reinigungsflüssigkeit.

Derartige Reinigungsvorrichtungen sind bekannt, durch das Aufsprühen von Wasser auf die verschmutzte Bandoberfläche werden Rückstände des Filtergutes gelöst und abgeschwemmt.

Die Reinigungswirkung ist hierbei jedoch nicht immer ausreichend, darüber hinaus ist es, abhängig vom jeweiligen Filtergut, wie zum Beispiel Fruchtmaische, manchmal zwingend erforderlich, das flüssigkeitsbenetzte Band auch nach der Reinigung einer separaten Trocknung zu unterziehen, um eine Verdünnung des im nächsten Zyklus zu behandelnden Filtergutes zu vermeiden.

Aufgabe der Erfindung ist daher eine wirksame Reinigungsvorrichtung für Filterbänder, so daß das Filterband nach der Reinigung in sauberem und getrocknetem Zustand dem nächsten Preßzyklus zugeführt werden kann.

Diese Aufgabe wird dadurch gelöst, daß über einer Bandoberfläche mindestens eine Sprühvorrichtung mit mindestens einer Spritzdüse gehalten ist, deren Gesamtbreite etwa der Breite des Endlosbandes entspricht und daß der Sprühvorrichtung eine Trocknungseinrichtung zugeordnet ist.

Weiterhin ist vorgesehen, daß die Sprühvorrichtung aus Sprüharmen besteht, denen die Trocknungseinrichtung zugeordnet ist, die in der Regel den Sprüharmen nachgeschaltet ist.

Mehrere Ausführungsbeispiele von Sprühvorrichtungen und Trocknungseinrichtungen sind Unteransprüchen zu entnehmen und in den Zeichnungen dargestellt; wobei in der Praxis je nach Anwendungszweck eine Kombination von mindestens einer Sprüheinrichtung mit mindestens einer Trocknungseinrichtung als Gesamtbaueinheit vorgesehen sein wird; es zeigen:

Figur 1-3:      Ausführungsbeispiele von Sprüheinrichtungen,

Figur 4-11:     Ausführungsbeispiele von Trocknungseinrichtungen,

Figur 12:       schematischer Längsschnitt einer Bandfilterpresse mit einigen Sprüh- und Trocknungseinrichtungen gemäß Figuren 1-11.

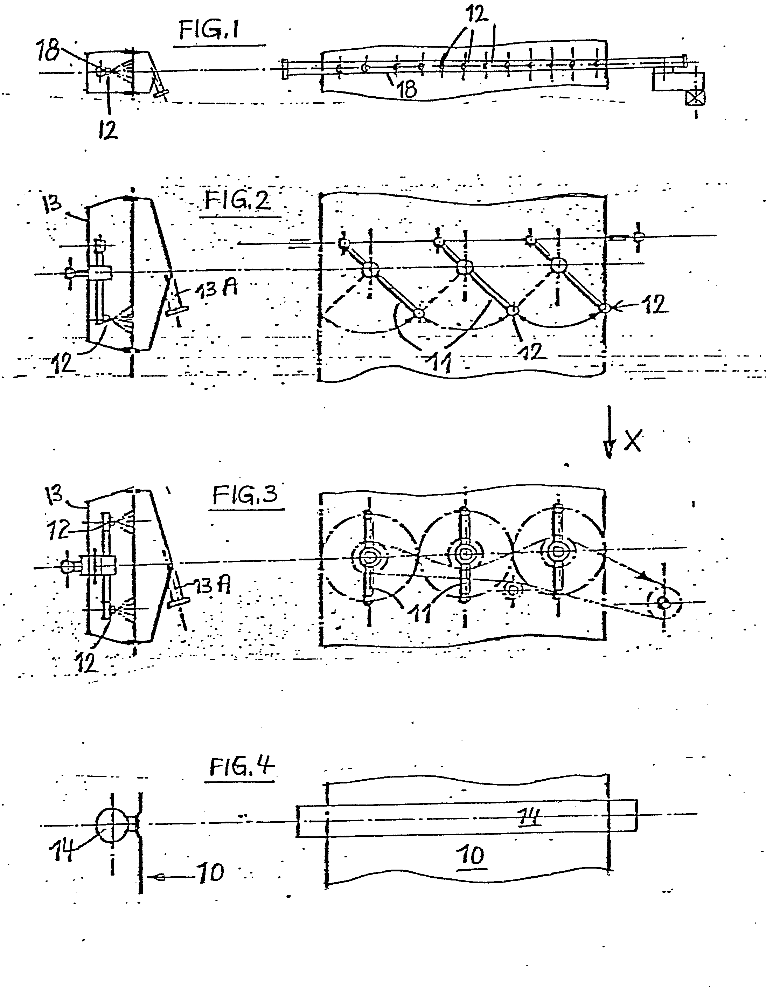

Die Figuren 1-7 zeigen in ihrem rechten Teil eine Aufsicht auf ein Filterband 10 und die schematisch darüber angeordneten Reinigungs- und Trocknungseinrichtungen, im linken Teil einen entsprechenden Längsschnitt.

Das Filterband 10 wird in Richtung des Pfeiles X bewegt und durchläuft nacheinander eine oder mehrere der nachfolgend im einzelnen beschriebenen Reinigungs- und Trocknungsvorrichtungen:

Eine erste Variante einer Sprüheinrichtung besteht aus einem Sprührohr 18, das senkrecht zur Längsachse des Filterbandes 10 über dessen Oberfläche befestigt ist und von einem Spritzschutz umgeben ist. Dieses Spritzrohr 18 kann entweder stationär über dem Filterband 10 angeordnet sein, oder aber auch senkrecht zur Bandlängsachse taktweise verschiebbar sein, beispielsweise gemäß dem DE-GM 85 02 656.5.

Hierbei handelt es sich um eine konstruktiv sehr einfache Ausgestaltung einer Sprüheinrichtung, bei der die Spritzdüsen 12 im wesentlichen in gleichen Abständen auf der Unterseite des Sprührohres 18 eingebracht sind.

Das zweite Ausführungsbeispiel gemäß der Figur 2 zeigt eine etwas aufwendiger gestaltete Vorrichtung, in einem nicht dargestellten Maschinenrahmen sind zunächst an drei vertikalen Achsen drei Sprüharme 11 derart montiert, daß sie in einer horizontalen Ebene gleichsinnig periodisch nach Art eines Scheibenwischers hin- und herbewegbar sind. Diese periodische Sprühbewegung wird dadurch erreicht, daß das hintere verlängerte Ende der Sprüharme über eine gemeinsame Stange mit einem (nicht dargestellten) Antriebsrad verbunden ist. Über eine gemeinsame Wasserzuleitung werden diese drei Sprüharme 11 versorgt. Sie sind in einem spritzwasserdichten Gehäuse 13 untergebracht, das über einen unteren Ablauf 13A verfügt. Der Einlauf und Auslauf des Siebbandes kann durch entsprechende manschettenartige Dichtungen gegen den Austritt von Spritzwasser zusätzlich geschützt werden.

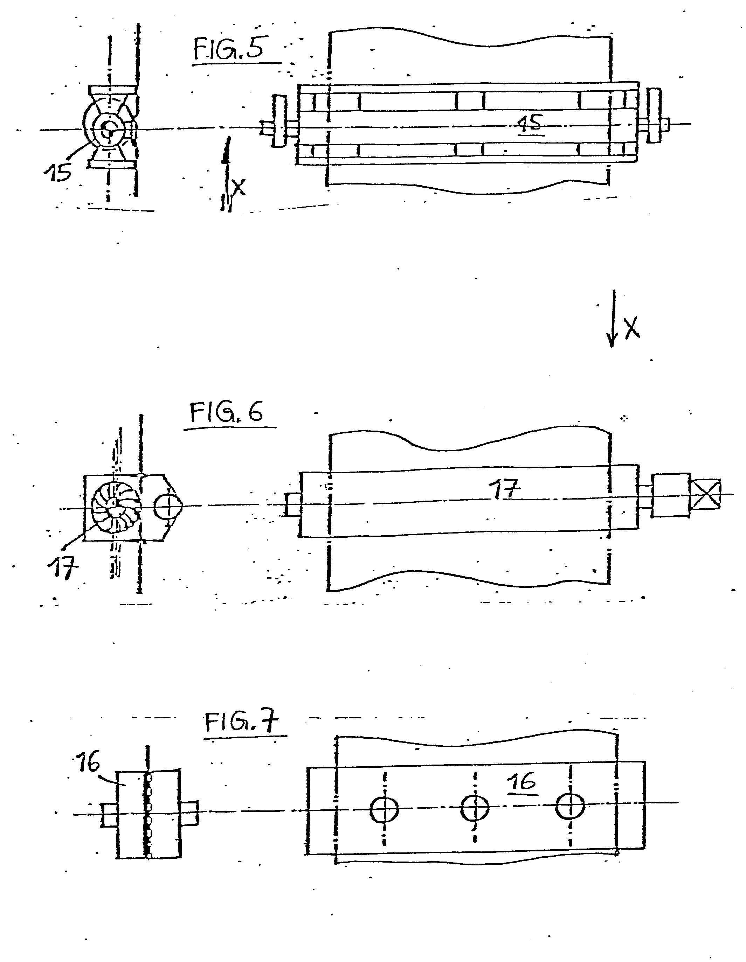

Alternativ bietet sich eine Ausgestaltung der Sprüharme an, wie sie in Figur 3 dargestellt ist, hierbei laufen die Sprüharme 11 rotierend um, wobei diese Bewegung dann über eine Kette oder Zahnriemen ebenfalls über ein Antriebsrad vermittelt werden kann. Die übrigen Bauteile wie Spritzschutzhaube 13 und Ablauf 13A entsprechen denjenigen in Figur 2.

Sowohl die periodisch hin- und herschwenkende Bewegung der Sprüharme 11 als auch deren rotierende Bewegung hat den Vorteil, daß die Rotations- bzw. Schwenkfrequenz so auf das Filterband 10 bzw. das Filtergut abgestimmt werden kann, daß eine einwandfreie Reinigung bei sparsamem Wasserverbrauch erreicht werden kann.

Nach dem Durchlaufen einer oder mehrerer der beschriebenen Sprüheinrichtungen gemäß den Figuren 1 bis 3 gelangt das Filterband 10 dann an eine oder mehrerer der im folgenden beschriebenen Trocknungseinrichtungen:

Als eine dieser Trocknungseinrichtungen (Figur 4) kann ein Saugrohr 14 vorgesehen sein, mit dem lediglich durch Einwirkung von Unterdruck auf die Bandoberfläche 10 die Flüssigkeitsreste abgesaugt werden können, wobei durch geeignete Einstellung des Unterdruckes und der Dimensionierung der Saugoberfläche eine Klopfwirkung auf die Bandoberfläche 10 erzielt werden kann.

Eine ähnliche Vorrichtung (Figur 5) besteht aus einem Vibrator 15, der periodisch auf das Band 10 einwirkt und gleichzeitig, beispielsweise mittels einem Saugrohr entsprechend dem Saugrohr 14, die Flüssigkeitsreste entfernt. Es kann auch eine vibrator-ähnliche Anordnung (Figur 6) aus einer Bürstenwalze 17 bestehen, die im wesentlichen aus einer parallel zur Bandoberfläche liegenden Rotationsachse besteht, an der in radialer Richtung Lamellen angeordnet sind, die so lang sind, daß sie bei der Rotation eine Schlagwirkung auf die Bandoberfläche ausüben. Zweckmäßigerweise sollte auch diese Anordnung in einem spritzwasserdichten Gehäuse untergebracht sein.

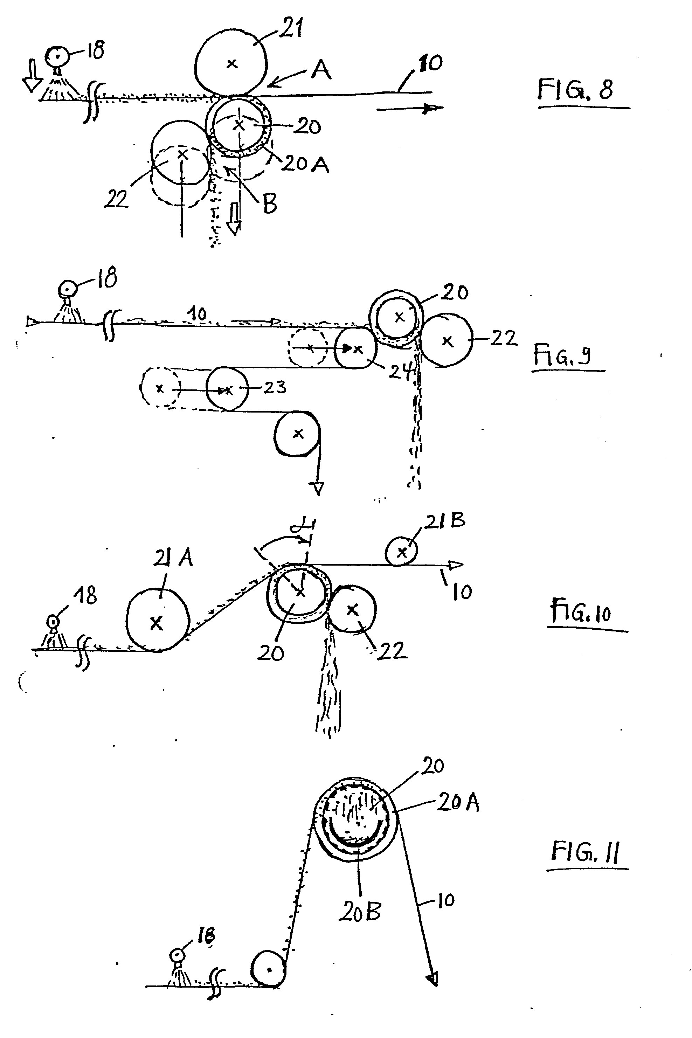

Schließlich kann eine einfache Trocknungseinrichtung (Figur 7) auch aus einem Heizaggregat 16 bestehen, das oberhalb und unterhalb der Bandoberfläche einwirkt und zusätzlich Preßluftdüsen beinhalten kann, sowie eine Vakuumabsaugung der Flüssigkeitsrückstände.

Eine besonders bevorzugte Trocknungseinrichtung ist in den Figuren 8 bis 11 näher beschrieben: Zentraler Bestandteil dieser Trocknungseinrichtung ist eine Preßwalze 20, die eine flüssigkeits-aufnehmende Oberfläche 20A aufweist, beispielsweise eine Filz-auflage oder eine sonstige flüssigkeitsaufnehmende Ummantelung. Über diese Saugwalze 20 wird nun das Filterband 10 nach der Besprühung mit der Reinigungsflüssigkeit (es ist schematisch ein Spritzrohr 18 gemäß Figur 1 vorgesehen) geführt, wobei das Filterband 10 an der Saugwalze 20 zumindest einen sehr großen Teil der Reinigungsflüssigkeit abgibt und somit getrocknet wird. Einzelne konstruktive Varianten dieser bevorzugten Lösung werden nun anhand der Figuren 8 bis 11 näher erläutert:

Beim Ausführungsbeispiel der Figur 8 wird das Filterband 10 ohne Richtungsänderung über die Saugwalze 20 mit der saugfähigen Oberflächenbeschichtung 20A hinweggeführt, wobei durch Anordnung einer zusätzlichen Preßwalze 21 über der Saugwalze 20 eine separate Preßstelle A gebildet wird, wobei der dort entstehende Liniendruck so bemessen wird, daß eine optimale Feuchtigkeitsabgabe vom Filterband 10 zur Saugwalze 20 erfolgt. Mit der Saugwalze 20 wirkt eine weitere Walze 22 zusammen, die die Aufgabe hat, die vollgesaugte Oberflächenbeschichtung 20A von der Flüssigkeit zu befreien und ihrerseits so fest gegen die Saugwalze 20 gepreßt wird, daß die saugfähige Oberfläche 20A praktisch vollständig von der Reinigungsflüssigkeit befreit wird, die an dieser zweiten Preßstelle B von der Saugwalze 20 herabtropft und durch geeignete, nicht dargestellte Vorrichtungen aufgefangen und abgeführt werden kann. In der schematischen Darstellung der Figuren 8 bis 11 ist der jeweilige Weg der Reinigungsflüssigkeit gepunktet dargestellt.

Da die Reinigung des Bandes 10 in der Regel nicht andauernd erfolgen muß, ist in Figur 8 schematisch angedeutet, daß die Saugwalze 20 und die mit dieser zusammenwirkenden Walze 22 zusammengekoppelt von dem Filterband 10 wegbewegt werden können, was durch die gestrichelte Darstellung dieser beiden Walzen angedeutet ist. Beim Reinigungsvorgang wird also folglich das Sprührohr 18 eingeschaltet und die Kombination Saugwalze/Walze 22 von unten an das Filterband 10 herangefahren.

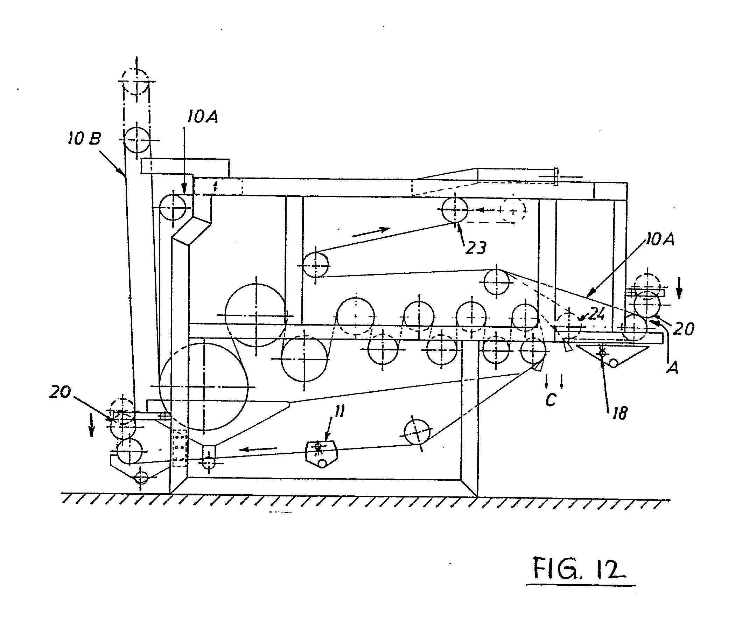

Beim Ausführungsbeispiel der Figur 9 wird vom selben Wirkungsmechanismus wie bei dem in Figur 8 beschriebenen ausgegangen, jedoch sind hier die beiden Walzen 20 und 22 ortsfest gelagert und es sind zwei zusätzliche Walzen 23,24 vorgesehen, mit deren Hilfe das Filterband 10 im Reinigungsprozeß an den Umfang der der Saugwalze 20 herangefahren werden kann.

Beim Ausführungsbeispiel der Figur 10 ist anstelle der Preßwalze 21 eine Anordnung von Walzen 21A,21B vorgesehen, mit deren Hilfe das Filterband 10 über einen bestimmten Winkelbereich der Saugwalze 20 hinweggeführt wird, was durch die Erhöhung der Kontaktzeit und damit der Saugeinwirkung eine Verbesserung der Saugwirkung erreichbar macht. Auch hierbei dient zum Auspressen der vollgesaugten Saugwalze 20 wiederum eine weitere Preßwalze 22.

Beim Ausführungsbeispiel der Figur 11 schließlich wird auf diese zusätzliche Preßwalze 22 verzichtet, hierbei ist die Saugwalze 20 als Lochwalze ausgeführt und das Filterband 10 wird um den oberen Bereich der Saugwalze 20 herumgeführt, so daß die dort ausgepreßte Reinigungsflüssigkeit in das Innere der Saugwalze 20 tropfen kann, wo sie in eine innerhalb der Saugwalze 20 angeordnete Auffangrinne 20B fällt und von dort in Richtung zu einer Stirnseite der Saugwalze abgeführt werden kann.

Es versteht sich von selbst, daß die dargestellten Ausführungsbeispiele in mannigfacher Variation miteinander kombiniert werden können, je nach Art der Reinigungsflüssigkeit, Konstruktion des Filterbandes und zu erreichendem Reinigungs- und/oder Trocknungsgrad.

Figur 12 zeigt ein praktisches Anwendungsbeispiel der beschriebenen Reinigungs- und Trocknungsvorrichtungen anhand einer Bandfilterpresse, die im einzelnen aus der US-PS 3,951,809 bekannt ist und die folglich im einzelnen in ihrem Aufbau nicht mehr erläutert zu werden braucht. Diese Bandfilterpresse arbeitet mit zwei Siebbändern 10A,10B, die zusammen durch die eigentliche Preßzone (S-förmig geschlungene Walzenanordnung) geführt werden und von dort wieder zum Aufgabepunkt des Preßgutes mittels geeigneter Umlenkwalzen zurücktransportiert werden.

Hinter der Auswurfstelle C der ausgepreßten Fruchtteile ist die Walze 24 in Pfeilrichtung nach rechts verschiebbar, von oben nach unten verschiebbar ist eine Saugwalze 20 am Maschinenrahmen gelagert, so daß hier eine Preßstelle A gebildet wird, in der das obere Filterband 10A gegen die Saugwalze geführt wird. Im Verschiebungsbereich des Filterbandes 10A ist ein Sprührohr 18 vorgesehen, das die verwendete Reinigungsflüssigkeit, insbesondere Wasser, auf das obere Filterband 10A aufbringt, wenn sich keine Früchte in der Presse befinden.

Eine ähnliche Anordnung ist für das untere Siebband 10B vorgesehen, hier sind jedoch zusätzlich noch rotierende Sprüharme 11 gemäß Figuren 2 oder 3 vorgesehen, die zur Benetzung der Bandoberfläche dienen. Das untere Filterband 10B wird dann über eine Saugwalze 20 (links unten) geführt, die vom Band entfernte Reinigungsflüssigkeit kann dann beispielsweise von einer unterhalb der Saugwalze 20 angeordneten Auffangrinne abtransportiert werden.

Der praktische Betrieb der Reinigungs- und Trocknungseinrichtungen ist dann wie folgt: zunächst wird die Walze 24 nach rechts verschoben, bis das Siebband 10A oberhalb des Sprührohrs 18 zu liegen kommt. Dann werden das Sprührohr 18 und die Sprührohre 11 in Betrieb genommen und das obere Filterband 10A und das untere Filterband 10B von festgesetzten Filtergutresten, wie beispielsweise Fruchtresten, gereinigt. Wenn die Filterbänder einen ausreichenden Reinigungsgrad erreicht haben, wird die Versorgung dieser Einrichtungen mit Reinigungsflüssigkeit unterbrochen und die Walze 24 des oberen Filterbandes 10A wird weiter nach rechts verfahren, wo sie auf die nach unten geschobene Saugwalze 20 trifft und das Band damit getrocknet wird. Um die nötige zusätzliche Bandlänge zur Verfügung zu stellen, verschiebt sich hierbei die Walze 23 nach links.

Die Trocknung des unteren Filterbandes 10B erfolgt entsprechend an der nach unten verschobenen Saugwalze 20, die links unten dargestellt ist. Auch hierbei versteht sich von selbst, daß Anordnung und Auswahl einer geeigneten Kombination von Sprüh- und Trocknungseinrichtungen innerhalb einer Filterpresse vom Fachmann auf die jeweiligen Erfordernisse abzustimmen sind.

Patentansprüche

1. Reinigungsvorrichtung für ein Endlosband, insbesondere für Siebbänder in einer Bandfilterpresse, mit Spritzdüsen zur flächigen Verteilung der Reinigungsflüssigkeit, dadurch gekennzeichnet, daß über einer Bandoberfläche (10) mindestens eine Sprühvorrichtung mit mindestens einer Spritzdüse (12) gehalten ist, deren Gesamtbreite etwa der Breite des Endlosbandes (10) entspricht, und daß der Sprühvorrichtung eine Trocknungseinrichtung zugeordnet ist.

2. Reinigungsvorrichtung nach Anspruch 1, dadurch gekennzeichnet, daß die Spritzdüsen (12) hinsichtlich ihrer Abstrahlrichtung variabel in der Sprühvorrichtung gehalten sind.

3. Reinigungsvorrichtung nach Anspruch 1, dadurch gekennzeichnet, daß die Sprühvorrichtung von einem spritzwasserdichten Gehäuse (13) umgeben ist.

4. Reinigungsvorrichtung nach Anspruch 1, dadurch gekennzeichnet, daß die Sprühvorrichtung aus mindestens einem kontinuierlich rotierenden Sprüharm (11) besteht.

5. Reinigungsvorrichtung nach Anspruch 4, dadurch gekennzeichnet, daß der Sprüharm (11) alternierend die Drehrichtung wechselt.

6. Reinigungsvorrichtung nach Anspruch 1, dadurch gekennzeichnet, daß die Sprühvorrichtung ein ortsfestes Spritzrohr (18) ist.

7. Reinigungsvorrichtung nach Anspruch 1, dadurch gekennzeichnet, daß das Spritzrohr (18) senkrecht zur Bandlängsachse verschiebbar ist.

8. Reinigungsvorrichtung nach Anspruch 4 und 6, gekennzeichnet durch eine Kombination von drehbaren Sprüharmen (11) und einem Spritzrohr (18).

9. Reinigungsvorrichtung nach Anspruch 1, dadurch gekennzeichnet, daß die Trocknungseinrichtung mindestens ein Saugrohr (14) beinhaltet, dessen Saugende auf einer Bandoberfläche aufliegt.

10. Reinigungsvorrichtung nach Anspruch 6, dadurch gekennzeichnet, daß auf eine Bandoberfläche ein Vibrator (15) einwirkt.

11. Reinigungsvorrichtung nach Anspruch 6 und 7, dadurch gekennzeichnet, daß der Vibrator (15) mit dem Saugende des Saugrohrs (14) verbunden ist.

12. Reinigungsvorrichtung nach Anspruch 4, dadurch gekennzeichnet, daß die Trocknungseinrichtung ein Heizaggregat (16) ist.

13. Reinigungsvorrichtung nach Anspruch 4, dadurch gekennzeichnet, daß das Heizaggregat ein Preßluftaggregat beinhaltet, dessen Preßluftdüsen auf das Band einwirken oder auf diesem zur Erzeugung von Vibrationen aufliegen.

14. Reinigungsvorrichtung nach Anspruch 1, dadurch gekennzeichnet, daß als Trocknungseinrichtung mindestens eine Walze (20) mit saugfähiger Oberflächenbeschichtung (20A) vorgesehen ist.

15. Reinigungsvorrichtung nach Anspruch 14, dadurch gekennzeichnet, daß die oberflächenbeschichtete Walze (20) zusammen mit einer zweiten Walze (21) eine separate Preßstelle (A) bildet, an der die oberflächenbeschichtete Walze (20) die restliche Reinigungsflüssigkeit aufnimmt.

16. Reinigungsvorrichtung nach Anspruch 15, dadurch gekennzeichnet, daß eine dritte Walze (22) vorgesehen ist, die eine zweite Preßstelle (B) mit der oberflächenbeschichteten Walze (20) bildet, an der die vollgesaugte Oberflächenbeschichtung (20A) ausgepreßt und somit die gespeicherte Reinigungsflüssigkeit entfernt wird.

17. Reinigungsvorrichtung nach Anspruch 15, dadurch gekennzeichnet, daß das zu trocknende Siebband (10) der separaten Preßstelle (A) nur im Bedarfsfalle unter Hilfe von verschiebbaren Walzen (23,24) zugeführt wird.

18. Reinigungsvorrichtung nach Anspruch 14, dadurch gekennzeichnet, daß die Walze (20) als Lochwalze ausgebildet ist und in ihrem Innenbereich eine Auffangrinne (20B) für die abgepreßte Reinigungsflüssigkeit aufweist.

0231877

**FIG. 1**

18
12
18
12

**FIG. 2**

13
13 A
12
12
11
12

↓ X

**FIG. 3**

13
12
13 A
12
11

**FIG. 4**

14
14
10
10

FIG.5

_15_

15

X

↓X

FIG.6

_17_

17

FIG.7

16

_16_

0231877

FIG. 8

FIG. 9

FIG. 10

FIG. 11

FIG. 12